# EUROPÄISCHE PATENTSCHRIFT

(11) **EP 3 341 217 B1**
(45) Veröffentlichungstag und Bekanntmachung des Hinweises auf die Patenterteilung: **14.05.2025**
(21) Anmeldenummer: 16750139.4
(22) Anmeldetag: 02.08.2016
(51) Int. Cl.: B44B 5/02, B44C 1/24, B44C 3/02, B60R 13/00, C14B 1/56, C14B 7/04

(54) **VERFAHREN ZUR HERSTELLUNG EINES DEKORBAUTEILS MIT EINER ERHABEN GEPRÄGTEN SICHTOBERFLÄCHE**
METHOD FOR MANUFACTURING A DECORATIVE ELEMENT HAVING A RAISED EMBOSSED VISIBLE SURFACE
PROCÉDÉ DE RÉALISATION D'UN ÉLÉMENT DÉCORATIF PRÉSENTANT UNE SURFACE VISIBLE IMPRIMÉE EN RELIEF

(30) Priorität: 26.08.2015 DE 102015216325
(43) Veröffentlichungstag der Anmeldung: 04.07.2018
(73) Patentinhaber: Bayerische Motoren Werke Aktiengesellschaft, 80809 München (DE)
(72) Erfinder: FRIEDRICH, Martin, 85716 Unterschleißheim (DE); RIETZEL, Dominik, 82061 Neuried (DE); ZIEGELMEIER, Stefan, 84051 Essenbach (DE)
(86) Internationale Anmeldenummer: PCT/EP2016/068376
(87) Internationale Veröffentlichungsnummer: WO 2017/032565

(56) Entgegenhaltungen:
- EP-A1- 2 886 367
- EP-A1- 2 886 367
- WO-A1-2014/193961
- DE-A1- 102005 006 541
- DE-A1- 102008 059 719
- DE-A1- 102008 059 719
- DE-A1- 3 607 647
- DE-A1- 3 607 647
- US-A- 5 849 238
- US-A- 5 849 238
- US-A1- 2008 141 569

## Beschreibung

Es wird ein Verfahren zur Herstellung eines Dekorbauteils mit einer erhaben geprägten Sichtoberfläche angegeben. Das Dekorbauteil kann beispielsweise eine Dekormaterialschicht, insbesondere eine Naturmaterialschicht aus Leder oder aus Furnierholz, aufweisen. Weiterhin wird ein durch das Verfahren hergestelltes Dekorbauteil angegeben.

Zum Prägen von Leder oder Textilien werden diese üblicherweise in einen Rahmen eingespannt und unter eine Presse gelegt. Anschließend wird das Motiv unter Wärme und Druck in das Werkstück geprägt. Die Prozessparameter bestimmen dabei über die Beständigkeit der Prägung. Je höher Druck und Temperatur sind bzw. je feuchter das Leder ist, desto langlebiger bzw. detaillierter ist die Umformung des Materials.

Für die Erzeugung von filigranen Texturen in Holz und/oder Leder werden sogenannte Propangasstempel oder elektrische Brennstempel verwendet. Dabei wird der Stempel auf die gewünschte Temperatur erhitzt und über einen definierten Zeitraum in das Material gedrückt. Mit diesem Verfahren können ausschließlich konkave Prägungen erzeugt werden. Eine motivische Hervorhebung im Holz erfolgt jedoch nicht.

Die im Stand der Technik bekannten Verfahren weisen eine Vielzahl von Nachteilen auf. So wird meist keine hohe Formbeständigkeit der Prägung erreicht und die eingesetzten, üblicherweise in Stahl oder Messing erodierten oder gefrästen Prägewerkzeuge erfordern einen kostenintensiven Herstellungsprozess. Weiterhin sind durch die bekannten Verfahren keine motivischen Hervorhebungen in Holz möglich, sondern es werden bisher ausschließlich konkave Prägungen erzeugt. Die hohen Kosten der Prägewerkzeuge sowie die lange Herstellungszeit desselben führen zu einer eingeschränkten Variantenflexibilität. Weiterhin entstehen bei einer hohen Anzahl an individualisierten Werkzeugen hohe Lagerungskosten für die Werkzeuge.

Die Druckschriften DE 10 2005 006541 A1, WO 2014/193961 A1, US 2008/141569 A1, WO 2015/120429 A1, DE 36 07 647 A1, DE 10 2008 059719 A1, EP 2 886 367 A1 und US 5 849 238 A zeigen verschiedene im Stand der Technik bekannte technische Lösungen in Bezug auf die Herstellung von Dekorbauteilen.

Es ist eine Aufgabe zumindest einiger Ausführungsformen, ein Verfahren zur Herstellung eines Dekorbauteils mit einer erhaben geprägten Sichtoberfläche anzugeben, das eine hohe Formbeständigkeit aufweist und dessen haptische Eigenschaften ohne hohen Aufwand an individuelle Kundenwünsche anpassbar sind. Eine weitere Aufgabe zumindest einiger Ausführungsformen ist es, ein durch das Verfahren hergestelltes Dekorbauteil anzugeben.

Diese Aufgaben werden durch ein Verfahren und eine Vorrichtung gemäß den unabhängigen Patentansprüchen gelöst. Vorteilhafte Ausführungsformen und Weiterbildungen gehen weiterhin aus den abhängigen Patentansprüchen, der nachfolgenden Beschreibung und aus den Zeichnungen hervor.

Bei dem hier beschriebenen Verfahren zur Herstellung eines Dekorbauteils mit einer erhaben geprägten Sichtoberfläche werden eine Prägevorrichtung sowie zumindest eine Dekormaterialschicht bereitgestellt. Die Prägevorrichtung weist eine Prägematrize und eine Prägepatrize auf. Die Dekormaterialschicht weist eine Dicke zwischen 0,6 mm und 5 mm auf.

Die Dekormaterialschicht wird derart zwischen der Prägematrize und der Prägepatrize angeordnet, dass eine Sichtoberfläche der Dekormaterialschicht der Prägematrize zugewandt ist und eine der Sichtoberfläche gegenüberliegende Rückseitenfläche der Dekormaterialschicht der Prägepatrize zugewandt ist. Anschließend wird ein Prägevorgang mittels der Prägevorrichtung durchgeführt, sodass die Dekormaterialschicht nach dem Prägevorgang einen erhabenen Bereich auf der Sichtoberfläche und einen gegenüberliegenden vertieften Bereich auf der Rückseitenfläche aufweist. Vorzugsweise wird der erhabene Bereich auf der Sichtoberfläche beim Ausbilden des vertieften Bereichs auf der Rückseitenfläche während desselben Prägevorgangs erzeugt. Anschließend wird zur Stabilisierung des erhabenen Bereichs ein Einlegeelement im vertieften Bereich angeordnet. Durch das Einlegeelement kann eine verbesserte Formbeständigkeit der Prägung bzw. des erhabenen Bereichs der Sichtoberfläche erzielt werden.

Mittels des hier beschriebenen Verfahrens ist eine Kombination von erhabenen und vertieften Motiven inklusive Oberflächentextur möglich. Insbesondere kann eine Kombination von konvexen und konkaven und/oder geprägten bzw. verdichteten Strukturen erreicht werden.

Gemäß einer weiteren Ausführungsform werden bei dem beschriebenen Verfahren zusätzlich zu dem erhabenen Bereich auf der Sichtoberfläche der Dekormaterialschicht ein weiterer erhabener Bereich und/oder zumindest ein vertiefter Bereich auf der Sichtoberfläche der Dekormaterialschicht erzeugt. Weiterhin können zusätzlich eine Vielzahl von weiteren, vorzugsweise jeweils räumlich getrennten, erhabenen Bereichen auf der Sichtoberfläche der Dekormaterialschicht und/oder eine Vielzahl von weiteren, vorzugsweise jeweils räumlich getrennten, vertieften Bereichen auf der Sichtoberfläche der Dekormaterialschicht erzeugt werden. Somit kann auf der Sichtoberfläche der Dekormaterialschicht ein erhabenes und/oder tiefgezogenes bzw. geprägtes konvexes und/oder konkaves Muster entstehen. Dadurch ist das Design des Dekorbauteils individuell an Kundenwünsche anpassbar. Beispielsweise können die erhabenen bzw. vertieften Bereiche auf der Sichtoberfläche durch denselben Prägevorgang hergestellt werden. Die erhabenen Bereiche auf der Sichtoberfläche können vorzugsweise alle wie weiter oben beschrieben durch Anordnen eines Einlegeelements stabilisiert werden.

Gemäß einer weiteren Ausführungsform werden eine oder mehrere vertiefende Prägungen in der Sichtoberfläche der Dekormaterialschicht erzeugt. Im Bereich der vertiefenden Prägungen weist die Dekormaterialschicht vorzugsweise eine geringere Dicke senkrecht zu ihrer Oberfläche auf als in direkt benachbarten Bereichen. Die vertiefenden Prägungen können z.B. im Bereich des erhabenen Bereichs und/oder in einem den erhabenen Bereich umgebenden ebenen Bereich ausgebildet werden. Die vertiefenden Prägungen können beispielsweise durch den Prägevorgang, mittels dessen der erhabene Bereich auf der Sichtoberfläche ausgebildet wird, erzeugt werden. Alternativ können die vertiefenden Prägungen vor oder nach diesem Prägevorgang mittels eines oder mehrerer weiterer Prägevorgängen hergestellt werden. Durch die vertiefenden Prägungen können z.B. Muster, Schriftzeichen, Logos oder dergleichen auf der Sichtoberfläche dargestellt werden.

Gemäß einer weiteren Ausführungsform weist das Einlegeelement eine Oberflächenkontur auf, welche an die Oberflächenkontur der Dekormaterialschicht im vertieften Bereich angepasst ist. Vorzugsweise ist insbesondere eine dem vertieften Bereich der Rückseitenfläche zugeordnete Oberfläche des Einlegeelements hinsichtlich ihrer Oberflächenkontur an die Oberflächenkontur des vertieften Bereichs angepasst. Beispielsweise kann das Einlegeelement dadurch derart im vertieften Bereich angeordnet werden, dass nach dem Anordnen des Einlegeelements keine Zwischenräume zwischen der Dekormaterialschicht und dem Einlegeelement vorhanden sind.

Gemäß einer weiteren Ausführungsform ist das Einlegeelement mittels eines additiven Fertigungsverfahrens hergestellt. Beispielsweise kann das Einlegeelement durch selektives Laserstrahlschmelzen, selektives Lasersintern, Stereolithografie, Multi Jet Fusion, Continuous Liquid Interface Production oder Fused Deposition Modelling hergestellt sein. Mittels des additiven Fertigungsverfahrens kann das Einlegeelement kostengünstig hergestellt werden und die Eigenschaften des Einlegeelements können gezielt eingestellt werden. Alternativ kann das Einlegeelement beispielsweise mittels eines Gussverfahrens, wie z.B. Silikonguss, hergestellt sein.

Gemäß einer weiteren Ausführungsform weist das Einlegeelement im Inneren eine Vielzahl von Ausnehmungen auf. Die Ausnehmungen des Einlegeelements stellen vorzugsweise Hohlräume innerhalb des Einlegeelements dar. Beispielsweise kann das Einlegeelement eine Zellstruktur mit einer Vielzahl von Ausnehmungen aufweisen. Dabei kann die Größe der einzelnen Zellen der Zellstruktur gleich ausgebildet sein oder variieren, je nach zu erreichender Stauchhärte des Einlegeelements. Die Zellstruktur des Einlegeelements kann insbesondere durch ein additives Fertigungsverfahren erzeugt werden. Die Ausnehmungen des Einlegeelements können weiterhin bzw. zusätzlich durch Verwendung nachträglich zerstörter Glashohlkugeln, die beispielsweise in einer Polymermatrix eingebettet sind, hergestellt werden.

Die haptischen Eigenschaften des erhabenen Bereichs der Sichtoberfläche können vorteilhafterweise individuell an Kundenwünsche angepasst werden, beispielsweise über eine Variation der Stauchhärten. Weiterhin ist eine Verbesserung der ergonomischen Aspekte von Prägungen, beispielsweise in Bezug auf einen Einsatz an einem Fahrersitz, einer Armlehne oder einer Kopfstütze, möglich.

Das Einlegeelement wird im vertieften Bereich befestigt. Das Einlegeelement wird dabei in den vertieften Bereich eingeklebt. Vorzugsweise wird insbesondere die dem vertieften Bereich der Rückseitenfläche der Dekormaterialschicht zugeordnete Oberfläche des Einlegeelements mittels einer Verklebung mit der Dekormaterialschicht verbunden.

Gemäß einer weiteren Ausführungsform weist das Einlegeelement einen Elastizitätsmodul von kleiner oder gleich 5,0 GPa auf. Vorzugsweise weist das Einlegeelement einen Elastizitätsmodul von kleiner oder gleich 0,5 GPa, besonders bevorzugt von kleiner oder gleich 50 MPa, auf.

Weiterhin weist das Einlegeelement ein thermoplastisches Elastomer auf oder besteht aus einem thermoplastischen Elastomer. Weiterhin kann das Einlegeelement ein thermoplastisches Material aufweisen. Beispielsweise kann das Einlegeelement Polyurethan aufweisen. Des Weiteren kann das Einlegeelement ein duroplastisches Material aufweisen. Vorteilhafterweise kann die Stauchhärte des Einlegeelements abhängig von den haptischen Anforderungen eingestellt werden. Es ist auch möglich, dass das Einlegeelement Silikon aufweist.

Weiterhin ist die Dekormaterialschicht eine Naturmaterialschicht, d.h. eine Materialschicht aus einem Naturmaterial. Die Naturmaterialschicht weist Leder auf oder besteht aus Leder. Des Weiteren kann die Dekormaterialschicht einen Stoff, beispielsweise einen Mikrofaserstoff, wie z.B. Alcantara, aufweisen
Gemäß einer weiteren Ausführungsform sind die Prägematrize und/oder die Prägepatrize mittels eines additiven Fertigungsverfahrens hergestellt. Beispielsweise können die Prägematrize und/oder die Prägepatrize durch selektives Laserstrahlschmelzen, durch selektives Lasersintern, mittels Stereolithografie, durch Multi Jet Fusion, mittels Continuous Liquid Interface Production oder mittels Fused Deposition Modelling hergestellt sein. Dadurch lassen sich eine hohe Designfreiheit und eine hohe Variantenvielfalt bei geringen Herstellungskosten erzielen. Darüber hinaus lassen sich durch die mittels additiver Fertigungsverfahren hergestellten Prägewerkzeuge aufgrund des schichtweisen Aufbaus besonders gut Höhenverläufe zwischen auf der Sichtoberfläche ausgebildeten erhabenen und vertieften Bereichen erreichen. Weiterhin können die Prägematrize und/oder die Prägepatrize gefräst und/oder erodiert sein.

Gemäß einer weiteren Ausführungsform weisen die Prägematrize und/oder die Prägepatrize zumindest einen Kanal und/oder eine poröse Struktur zur Führung eines Mediums bzw. für eine Temperierung und/oder Konditionierung auf. Während des Prägevorgangs wird vorzugsweise ein erstes Medium an eine Werkzeugoberfläche der Prägematrize und/oder der Prägepatrize geleitet. Das erste Medium kann beispielsweise ein flüssiges oder gasförmiges Medium, wie z.B. Wasser, Wasserdampf oder Luft sein. Vorzugsweise weist das erste Medium eine hohe Temperatur auf. Durch das Leiten des ersten Mediums an die Werkzeugoberfläche kann das erste Medium beispielsweise die Temperatur der Dekormaterialschicht erhöhen, ohne diese direkt zu berühren, so dass die Dekormaterialschicht durch den Wärmeeintrag einfacher geformt werden kann. Alternativ kann das erste Medium beim Leiten an die Werkzeugoberfläche mit der Dekormaterialschicht in direkten Kontakt treten, beispielsweise in Form eines Bedampfens der Dekormaterialschicht mit Wasserdampf. Dadurch kann die Dekormaterialschicht während des Formvorgangs duktil gehalten werden. Nach dem Erreichen der gewünschten Form der Dekormaterialschicht kann die Zufuhr des ersten Mediums gestoppt werden.

Gemäß einer weiteren Ausführungsform wird nach dem Zuführen des ersten Mediums an die Werkzeugoberfläche der Prägematrize und/oder der Prägepatrize ein zweites Medium an die Werkzeugoberfläche der Prägematrize bzw. der Prägepatrize geleitet. Das zweite Medium weist vorzugsweise eine niedrigere Temperatur als das erste Medium auf. Bei dem zweiten Medium kann es sich wiederum um ein gasförmiges oder flüssiges Medium, wie z.B. Luft, Wasserdampf oder Wasser handeln. Das zweite Medium kann entweder in die Nähe der Dekormaterialschicht geleitet werden, ohne diese zu berühren, oder alternativ beim Leiten an die Werkzeugoberfläche die Dekormaterialschicht direkt berühren. Mittels des zweiten Mediums kann die gewünschte Form der Dekormaterialschicht fixiert werden.

Durch das hier beschriebene Verfahren kann eine hohe Variantenflexibilität bei geringen Herstellkosten erreicht werden. Des Weiteren können die Lagerungskosten für die Einmalwerkzeuge reduziert werden. Das Verfahren zeichnet sich auch durch sehr kurze Vorlaufzeiten bei vergleichsweise geringen Werkzeugkosten aus, wodurch besser auf kundenindividuelle Wünsche reagiert werden kann.

Weiterhin wird ein Dekorbauteil, welches mittels eines hier beschriebenen Verfahrens hergestellt ist, angegeben. Das Dekorbauteil kann eines oder mehrere Merkmale der vorgenannten Ausführungsformen aufweisen. Die bisher und im Folgenden genannten Merkmale können sich sowohl auf das beschriebene Verfahren als auch auf das mittels des Verfahrens hergestellte Dekorbauteil beziehen.

Gemäß zumindest einer Ausführungsform weist das Dekorbauteil eine Dekormaterialschicht mit einer Sichtoberfläche und einer der Sichtoberfläche gegenüberliegenden Rückseitenfläche auf. Die Sichtoberfläche weist einen erhabenen Bereich auf. Die Rückseitenfläche weist einen dem erhabenen Bereich der Sichtoberfläche gegenüberliegenden vertieften Bereich auf. Weiterhin umfasst das Dekorbauteil ein Einlegeelement, welches zur Stabilisierung des erhabenen Bereichs im vertieften Bereich angeordnet ist. Vorzugsweise ist das Einlegeelement im vertieften Bereich befestigt. Das Einlegeelement ist mittels einer Verklebung im vertieften Bereich befestigt. Bei dem Dekorbauteil handelt es sich um ein Innenverkleidungsteil eines Fahrgastraumes eines Fahrzeugs.

Gemäß einer weiteren Ausführungsform ist das Einlegeelement mittels eines additiven Fertigungsverfahrens hergestellt. Das Einlegeelement weist ein thermoplastisches Elastomer auf oder besteht aus einem thermoplastischen Elastomer, wie z.B. Polyurethan. Die Nachgiebigkeit bzw. Elastizität des Einlegeelements sind, je nach Werkstoff und Auslegung der Strukturen, an individuelle Kundenwünsche bzw. Anwendungsbereiche anpassbar. Realisiert werden kann dies beispielsweise durch einen zellstrukturartigen Aufbau des Einlegeelements, dessen Eigenschaften je nach vorher auslegbarer Zellgröße, Zellgeometrie, Zellwandstärke bzw. Zellenzahl variieren.

Gemäß einer weiteren Ausführungsform kann die Dekormaterialschicht eine oder mehrere vertiefende Prägungen auf der Sichtoberfläche aufweisen. Im Bereich der vertiefenden Prägungen weist die Dekormaterialschicht vorzugsweise eine geringere Dicke auf als in angrenzenden Bereichen. Die vertiefende Prägung bzw. die vertiefende Prägungen können im erhabenen Bereich und/oder in ebenen Bereichen der Sichtoberfläche ausgebildet sein.

Weitere Vorteile und vorteilhafte Ausführungsformen des hier beschriebenen Verfahrens und eines hier beschriebenen Dekorbauteils ergeben sich aus den im Folgenden in Verbindung mit den Figuren 1 bis 5 beschriebenen Ausführungsformen. Es zeigen:
- Fig. 1 und 2: schematische Darstellungen eines hier beschriebenen Verfahrens zur Herstellung eines Dekorbauteils mit einer erhaben geprägten Sichtoberfläche gemäß einem Ausführungsbeispiel,
- Fig. 3 bis 6: schematische Darstellungen von Schnittansichten von mittels des hier beschriebenen Verfahrens hergestellten Dekorbauteilen gemäß verschiedenen Ausführungsbeispielen, und
- Fig. 7: eine schematische Darstellung eines Einlegeelements gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

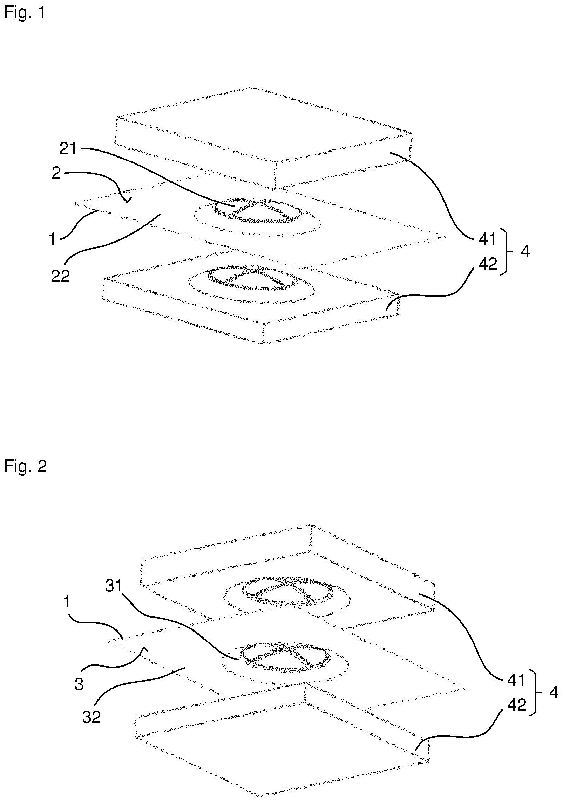

Die Figuren 1 und 2 zeigen das hier beschriebene Verfahren zur Herstellung eines Dekorbauteils mit einer erhaben geprägten Sichtoberfläche in zwei verschiedenen perspektivischen Ansichten. Das Dekorbauteil ist ein Bauteil einer Innenausstattung eines Fahrzeugs.

Bei dem Verfahren werden eine Dekormaterialschicht 1 und eine Prägevorrichtung 4, die eine Prägematrize 41 und eine Prägepatrize 42 umfasst, bereitgestellt. Die Prägematrize 41 und die Prägepatrize 42 sind vorzugsweise durch ein additives Fertigungsverfahren, wie z.B. durch selektives Laserstrahlschmelzen, durch selektives Lasersintern, mittels Stereolithografie, durch Multi Jet Fusion, mittels Continuous Liquid Interface Production oder mittels Fused Deposition Modelling hergestellt.

Die Dekormaterialschicht 1 wird zwischen der Prägematrize 41 und der Prägepatrize 42 derart angeordnet, dass eine Sichtoberfläche 2 der Dekormaterialschicht 1 der Prägematrize 41 zugewandt ist und eine der Sichtoberfläche 2 gegenüberliegende Rückseitenfläche 3 der Dekormaterialschicht 1 der Prägepatrize 42 zugewandt ist. Anschließend wird ein Prägevorgang mittels der Prägevorrichtung 4 durchgeführt, sodass die Dekormaterialschicht 1 nach dem Prägevorgang einen erhabenen Bereich 21 und einen den erhabenen Bereich umschließenden ebenen Bereich 22 auf der Sichtoberfläche 2 sowie einen gegenüberliegenden vertieften Bereich 31 auf der Rückseitenfläche 3 aufweist. Danach wird ein Einlegeelement (nicht gezeigt) im vertieften Bereich 31 zur Stabilisierung des erhabenen Bereichs 21 angeordnet. Das Einlegeelement wird im vertieften Bereich 31 befestigt, indem es in den vertieften Bereich 31 eingeklebt wird.

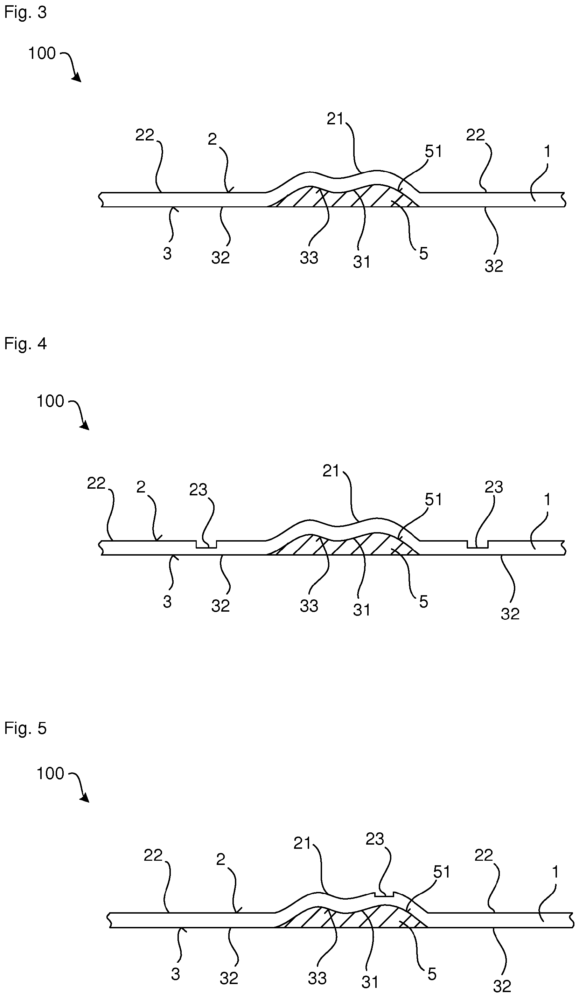

Die Figur 3 zeigt eine schematische Darstellung einer Schnittansicht eines Dekorbauteils 100, welches mittels des hier beschriebenen Verfahrens hergestellt ist. Das Dekorbauteil 100 weist eine Dekormaterialschicht 1 auf, welche eine Sichtoberfläche 2 und eine der Sichtoberfläche 2 gegenüberliegende Rückseitenfläche 3 aufweist. Auf der Sichtoberfläche 2 ist ein erhabener Bereich 21 ausgebildet und gegenüberliegend ist auf der Rückseitenfläche 3 ein vertiefter Bereich 31 ausgebildet. Der erhabene Bereich 21 und der vertiefte Bereich 31 sind vorzugsweise mittels einer Prägevorrichtung 4, die insbesondere eine Prägematrize 41 und eine Prägepatrize 42 aufweisen kann, ausgebildet. Im vertieften Bereich 31 ist ein Einlegeelement 5 zur Stabilisierung des erhabenen Bereichs 21 angeordnet. Das Einlegeelement 5 ist in den vertieften Bereich 31 eingeklebt.

Das Einlegeelement 5 ist vorzugsweise durch ein additives Fertigungsverfahren hergestellt. Beispielsweise kann das Einlegeelement 5 durch selektives Laserstrahlschmelzen, selektives Lasersintern, Stereolithografie, Multi Jet Fusion, Continuous Liquid Interface Production oder Fused Deposition Modelling hergestellt sein. Das Einlegeelement 5 kann z.B. aus einem thermoplastischen Elastomer, beispielsweise aus Polyurethan, bestehen.

Das Einlegeelement 5 weist an der der Rückseitenfläche 3 zugewandten Oberfläche eine Oberflächenkontur 51 auf, welche an die Oberflächenkontur 33 der Rückseitenfläche 3 im vertieften Bereich 31 angepasst ist. Vorzugsweise ist das Einlegeelement 5 formschlüssig mit der Rückseitenfläche 3 der Dekormaterialschicht 1 verbunden. Eine dem vertieften Bereich 31 abgewandte Oberfläche des Einlegeelements 5 schließt vorzugsweise bündig mit dem ebenen Bereich 32 der Rückseitenfläche 3 ab.

In der Figur 4 ist eine Schnittansicht eines hier beschriebenen Dekorbauteils 100 gemäß einem weiteren Ausführungsbeispiel gezeigt. Im Unterschied zu dem in der Figur 3 gezeigten Ausführungsbeispiel weist das Dekorbauteil 100 vertiefende Prägungen 23 auf der Sichtoberfläche 2 auf. In diesem Ausführungsbeispiel sind die vertiefenden Prägungen 23 insbesondere im ebenen Bereich der Sichtoberfläche 2 ausgebildet. In den Bereichen der vertiefenden Prägungen 23 weist die Dekormaterialschicht 1 eine geringere Dicke auf als in angrenzenden Bereichen. Die auf der Sichtoberfläche 2 ausgebildeten vertiefenden Prägungen 23 können im selben Verfahrensschritt, in welchem der erhabene Bereich 21 und der gegenüberliegende vertieften Bereich 31 erzeugt werden, hergestellt werden.

Die Figur 5 zeigt ein weiteres Ausführungsbeispiel eines Dekorbauteils 100, wobei im Gegensatz zum Ausführungsbeispiel gemäß Figur 3 zumindest eine vertiefende Prägung 23 im erhabenen Bereich 21 der Sichtoberfläche 2 ausgebildet ist. Im Bereich der vertiefenden Prägung 23 weist die Dekormaterialschicht 1 eine geringere Dicke auf als in angrenzenden Bereichen.

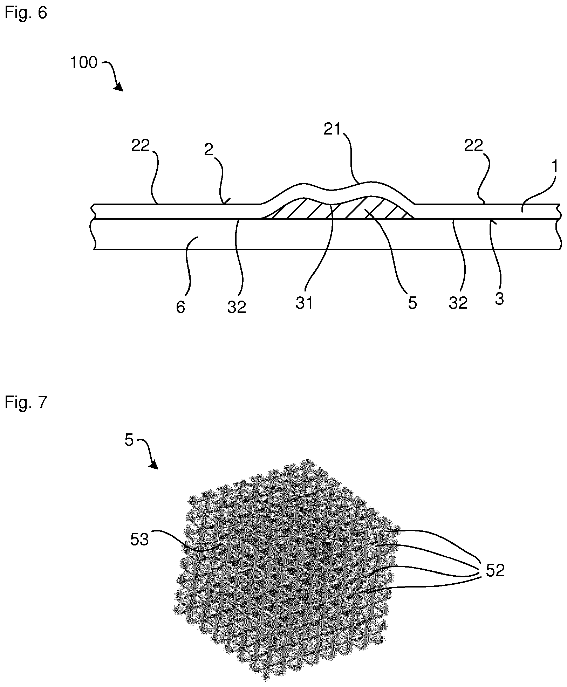

In der Figur 6 ist eine Schnittansicht eines hier beschriebenen Dekorbauteils 100 gemäß einem weiteren Ausführungsbeispiel gezeigt. Im Unterschied zu dem in der Figur 3 gezeigten Ausführungsbeispiel ist die Dekormaterialschicht 1 mit einem Trägermaterial 6 verbunden. Die Dekormaterialschicht 1 und das Trägermaterial 6 umschließen vorzugsweise vollständig das Einlegeelement 5. Vorzugsweise sind zwischen dem Einlegeelement 5 und dem Trägermaterial 6 keine Freiräume vorhanden. Beispielsweise kann es sich bei dem Trägermaterial 6 um eine Montagefläche oder um ein Polstermaterial handeln.

Die Figur 7 zeigt eine schematische Darstellung eines Einlegeelements 5, welches eine Zellstruktur 53 aufweist. Mittels der Zellstruktur 53, welche eine Vielzahl von Ausnehmungen 52 aufweist, die Hohlräume im Inneren des Einlegeelements 5 bilden, lassen sich die Stauchhärte und die haptischen Eigenschaften des erhabenen Bereichs 21 der Sichtoberfläche 2 der Dekormaterialschicht 1 gezielt einstellen. Die Ausnehmungen 52 können beispielsweise während des Fertigungsverfahrens des Einlegeelements 5 erzeugt werden, insbesondere wenn das Einlegeelement 5 durch ein additives Fertigungsverfahren hergestellt ist. Weiterhin können die Ausnehmungen 52 durch nachträglich zerstörte Glashohlkugeln gebildet sein.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Dekormaterialschicht
- 2: Sichtoberfläche
- 21: erhabener Bereich
- 22: ebener Bereich
- 23: vertiefende Prägung
- 3: Rückseitenfläche
- 31: vertiefter Bereich
- 32: ebener Bereich
- 33: Oberflächenkontur
- 4: Prägevorrichtung
- 41: Prägematrize
- 42: Prägepatrize
- 5: Einlegeelement
- 51: Oberflächenkontur
- 52: Ausnehmung
- 53: Zellstruktur
- 6: Trägermaterial
- 100: Dekorbauteil

## Patentansprüche

1. Verfahren zur Herstellung eines als Innenverkleidungsteil eines Fahrgastraumes eines Fahrzeugs ausgebildeten Dekorbauteils (100) mit einer erhaben geprägten Sichtoberfläche (2), aufweisend die folgenden Schritte:
- Bereitstellen einer Prägevorrichtung (4), die eine Prägematrize (41) und eine Prägepatrize (42) aufweist,
- Bereitstellen zumindest einer Dekormaterialschicht (1), welche eine Dicke zwischen 0,6 mm und 5 mm aufweist, wobei die Dekormaterialschicht (1) Leder aufweist oder aus Leder besteht,
- Anordnen der Dekormaterialschicht (1) zwischen der Prägematrize (41) und der Prägepatrize (42) derart, dass eine Sichtoberfläche der Dekormaterialschicht (1) der Prägematrize (41) zugewandt ist und eine der Sichtoberfläche (2) gegenüberliegende Rückseitenfläche (3) der Dekormaterialschicht (1) der Prägepatrize (42) zugewandt ist,
- Durchführen eines Prägevorgangs mittels der Prägevorrichtung (4), so dass die Dekormaterialschicht (1) nach dem Prägevorgang einen erhabenen Bereich (21) auf der Sichtoberfläche (2) und einen gegenüberliegenden vertieften Bereich (31) auf der Rückseitenfläche (3) aufweist,
- Herstellen eines Einlegeelements (5) durch ein additives Fertigungsverfahren, wobei das Einlegeelement (5) nach der Herstellung eine Zellstruktur (53) aufweist, die durch das additive Fertigungsverfahren erzeugt ist, wobei das Einlegeelement ein thermoplastisches Elastomer aufweist, und
- Anordnen des Einlegeelements (5) im vertieften Bereich (31) zur Stabilisierung des erhabenen Bereichs (21), wobei das Einlegeelement (5) in den vertieften Bereich (31) eingeklebt wird.

2. Verfahren nach Anspruch 1, wobei das Einlegeelement (5) eine Oberflächenkontur (51) aufweist, die an die Oberflächenkontur (33) der Dekormaterialschicht (1) im vertieften Bereich (31) angepasst ist.

3. Verfahren nach einem der vorhergehenden Ansprüche, wobei das Einlegeelement (5) im Inneren eine Vielzahl von Ausnehmungen (52) aufweist.

4. Verfahren nach einem der vorhergehenden Ansprüche, wobei das Einlegeelement (5) einen Elastizitätsmodul von kleiner oder gleich 5,0 GPa, vorzugsweise von kleiner oder gleich 0,5 GPa, aufweist.

## Claims

1. Method for producing a decorative component (100), which is designed as an interior trim part of a passenger cabin of a vehicle and has a visible surface (2) embossed in a raised manner, said method comprising the following steps:
- providing an embossing device (4) which has a female embossing mould (41) and a male embossing mould (42),
- providing at least one decorative material layer (1) having a thickness between 0.6 mm and 5 mm, wherein the decorative material layer (1) comprises leather or consists of leather,
- disposing the decorative material layer (1) between the female embossing mould (41) and the male embossing mould (42) in such a manner that a visible surface of the decorative material layer (1) faces the female embossing mould (41), and a reverse face (3) of the decorative material layer (1) that is opposite the visible surface (2) faces the male embossing mould (42),
- carrying out an embossing procedure by means of the embossing device (4) such that the decorative material layer (1) after the embossing procedure has a raised region (21) on the visible surface (2) and an opposite depressed region (31) on the reverse face (3),
- producing an insert element (5) by an additive manufacturing method, wherein the insert element (5) after production has a cellular structure (53) which is generated by the additive manufacturing method, wherein the insert element comprises a thermoplastic elastomer, and
- disposing the insert element (5) in the depressed region (31) for stabilizing the raised region (21), wherein the insert element (5) is adhesively bonded into the depressed region (31).

2. Method according to Claim 1, wherein the insert element (5) has a surface contour (51) which is adapted to the surface contour (33) of the decorative material layer (1) in the depressed region (31).

3. Method according to one of the preceding claims, wherein the insert element (5) has a multiplicity of recesses (52) in the interior.

4. Method according to one of the preceding claims, wherein the insert element (5) has a modulus of elasticity of less than or equal to 5.0 GPa, preferably of less than or equal to 0.5 GPa.

## Revendications

1. Procédé de fabrication d'un élément décoratif (100) conçu comme élément d'habillage intérieur d'un habitacle de véhicule, ayant une surface visible (2) imprimée en relief, comprenant les étapes suivantes :
- se mettre à disposition un dispositif d'impression (4) qui comprend une matrice d'impression (41) et un poinçon d'impression (42),
- se mettre à disposition au moins une couche (1) de matériau décoratif d'une épaisseur comprise entre 0,6mm et 5mm, la couche (1) de matériau décoratif étant en cuir ou constituée de cuir,
- disposer la couche (1) de matériau décoratif entre la matrice d'impression (41) et le poinçon d'impression (42) de telle sorte qu'une surface visible de la couche (1) de matériau décoratif soit tournée vers la matrice d'impression (41) et qu'une surface arrière (3) de la couche (1) de matériau décoratif opposée à la surface visible (2) soit tournée vers le poinçon d'impression (42),
- mettre en œuvre un processus d'impression au moyen du dispositif d'impression (4), de sorte que la couche (1) de matériau décoratif présente après le processus d'impression une zone en relief (21) sur la surface visible (2) et une zone en creux (31) opposée sur la surface arrière (3),
- fabriquer un élément d'insertion (5) par un procédé de fabrication additive, l'élément d'insertion (5) présentant après fabrication une structure cellulaire (53) qui est générée par le procédé de fabrication additive, l'élément d'insertion présentant un élastomère thermoplastique, et
- mettre en place l'élément d'insertion (5) dans la zone en creux (31) pour stabiliser la zone en relief (21), l'élément d'insertion (5) étant collé dans la zone en creux (31).

2. Procédé selon la revendication 1, dans lequel l'élément d'insertion (5) présente un contour de surface (51) qui est adapté au contour de surface (33) de la couche (1) de matériau décoratif dans la zone en creux (31).

3. Procédé selon l'une des revendications précédentes, dans lequel l'élément d'insertion (5) présente à l'intérieur de lui une pluralité d'évidements (52).

4. Procédé selon l'une des revendications précédentes, dans lequel l'élément d'insertion (5) présente un module d'élasticité inférieur ou égal à 5,0GPa, de préférence inférieur ou égal à 0,5GPa.
